# EUROPEAN PATENT APPLICATION

(11) **EP 4 379 153 A1**
(43) Date of publication of application: **05.06.2024**
(21) Application number: 22849473.8
(22) Date of filing: 26.07.2022
(51) Int. Cl.: E02F 9/26, H01M 50/204, H01M 50/249, H01M 50/284

(54) **DETECTION DEVICE**

(30) Priority: 27.07.2021 JP 2021122256
(71) Applicant: Nippon Seiki Co., Ltd., Nagaoka-shi, Niigata 940-8580 (JP)
(72) Inventor: SAKURAZAWA Masashi, Nagaoka (JP); TSUCHIDA Kaito, Nagaoka (JP)
(74) Representative: Carpmaels & Ransford LLP
(86) International application number: PCT/JP2022/028730
(87) International publication number: WO 2023/008412

(57) **Abstract**

Provided is a detection device with which it is possible to achieve downsizing. This detection device comprises: a sensor unit 21 that acquires information about movement of a boom 4 provided on a hydraulic shovel 2, and transmits the acquired information about movement by means of data communication using a wireless communication unit 23; a power supply means 30 that supplies power to the sensor unit 21; and a case member 50 housing the wireless communication unit 23, the sensor unit 21, and the power supply means 30. In addition, the sensor unit 21 is mounted on a substrate 20 placed inside the case member 50.

## Description

### TECHNICAL FIELD

The present invention relates to a detection device disposed in a movable portion such as a boom, an arm, or a bucket provided in a work machine, for example.

### BACKGROUND ART

Conventionally, as this type of detection device, for example, a detection device described in the following Patent Document 1 is known. The detection device as an inertial sensor described in Patent Document 1 detects a posture of a movable portion such as a boom, an arm, or a bucket provided in a construction machine (work machine), and is provided in the vicinity of a rotation shaft of the movable portion in such a way that a dynamic acceleration at a time of operation of the movable portion is unlikely to act.

### PRIOR ART DOCUMENT

### PATENT DOCUMENT

Patent Document 1: Japanese Unexamined Patent Application Publication No. 2019-132038

### SUMMARY OF THE INVENTION

### PROBLEMS TO BE SOLVED BY THE INVENTION

A detection device disposed in the above-described movable portion (a boom, an arm, or a bucket) is operated by being supplied with electric power from a power supply device mounted on, for example, a main body (such as a swing structure) of a construction machine via a power supply cable. For example, it is conceived that a power supply cable is installed along a movable portion in view of a structure of a construction machine. However, in such a configuration, since a power supply cable is required to operate the detection device, a large-scale wiring operation using the power supply cable is required, and a compact configuration of a detection device that does not require the wiring operation is desired.

The present invention has been made in view of the above-described circumstances, and an object of the present invention is to provide a detection device that can be made compact.

### SOLUTION TO PROBLEM

A detection device according to a first aspect includes: a sensor unit that acquires information related to movement of a movable portion provided in a movable body, and transmits the acquired information related to movement by data communication using a wireless communication unit; a power supply means that supplies electric power to the sensor unit; and a case member that accommodates the wireless communication unit, the sensor unit, and the power supply means.

A detection device according to a second aspect is that, in the detection device according to the first aspect, the sensor unit is mounted on a substrate disposed inside the case member.

A detection device according to a third aspect is that, in the detection device according to the second aspect, the case member includes a first wall portion facing the substrate, a second wall portion surrounding the power supply means, and an opening portion associated with the first wall portion, and a cover member is disposed on the second wall portion in such a way as to close the opening portion.

A detection device according to a fourth aspect is that, in the detection device according to any one of the first to the third aspects, the power supply means includes a battery serving as a power source for supplying the electric power, and a battery case that accommodates the battery.

A detection device according to a fifth aspect is that, in the detection device according to any one of the second to the fourth aspects, the substrate and the power supply means are disposed inside the case member in such a way as to overlap each other.

A detection device according to a sixth aspect further includes, in the detection device according to any one of the second to the fifth aspects, a holding member interposed between the substrate and the power supply means, wherein the substrate and the power supply means are held by the holding member.

A detection device according to a seventh aspect is that, in the detection device according to the sixth aspect, the holding member is formed with a positioning portion for positioning and fixing an outer peripheral portion of the substrate.

A detection device according to an eighth aspect is that, in the detection device according to any one of the third to the seventh aspects, the cover member includes a mounted portion to be placed on the second wall portion, and one of the second wall portion and the mounted portion is formed with a recess portion, the other thereof is formed with a projection portion entering into the recess portion, and an airtight member is disposed in an empty space to be formed between the recess portion and the projection portion.

### EFFECT OF THE INVENTION

According to the present invention, it is possible to provide a detection device that can be made compact.

### BRIEF DESCRIPTION OF THE DRAWINGS

Fig. 1 is a diagram illustrating a work support system according to an embodiment of the present invention.
Fig. 2 is a block diagram of the work support system according to the embodiment.
Fig. 3 is a front view of a detection device according to the embodiment.
Fig. 4 is a cross-sectional view taken along the line A-A in Fig. 3.
Fig. 5 is a diagram illustrating a substrate and a support portion when viewed from the direction of the arrow B in Fig. 4.
Fig. 6 is a rear view of the detection device when an attachment member is viewed from the case-member side in Fig. 4.
Fig. 7 is a cross-sectional view taken along the line B-B in Fig. 3.
Fig. 8 is a cross-sectional view taken along the line C-C in Fig. 3.
Fig. 9 is an enlarged cross-sectional view of main parts illustrating a cover member, a magnetic member, and the attachment member according to the embodiment.
Fig. 10 is an enlarged cross-sectional view of main parts of a detection device according to a modification of the embodiment.
Fig. 11 is an enlarged cross-sectional view of main parts of a detection device according to another modification of the embodiment.

### MODE FOR CARRYING OUT THE INVENTION

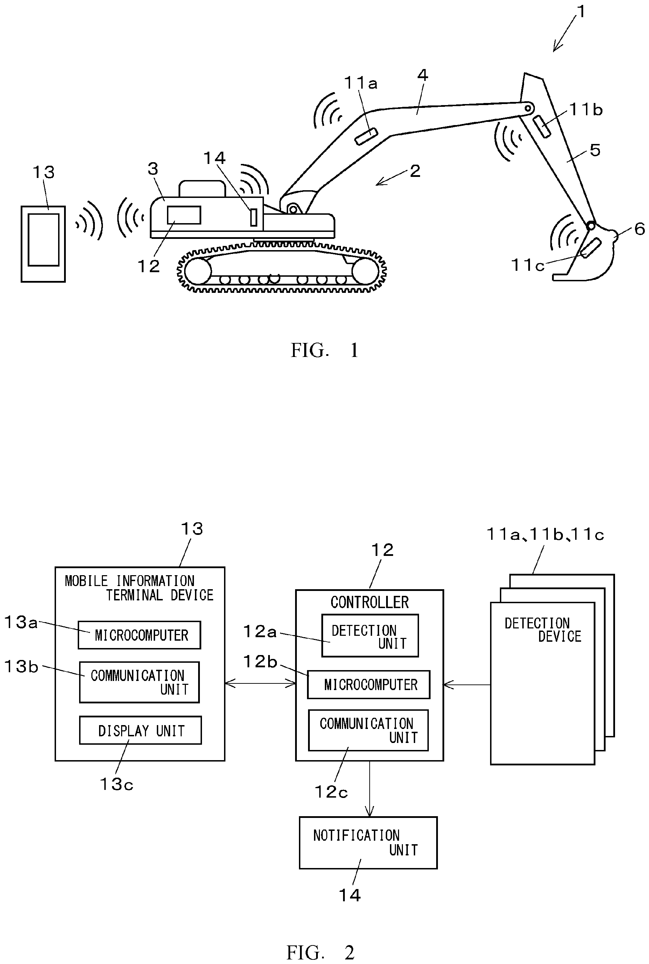

In the following, an embodiment in which a detection device according to the present invention is applied to a work support system is described with reference to Figs. 1 to 9.

Fig. 1 is a diagram illustrating a work support system 1 according to an embodiment of the present invention, and Fig. 2 is a block diagram of the work support system 1.

The work support system 1 supports work of an operator operating a hydraulic shovel 2, which is a construction machine (movable body), by a function of machine guidance. Herein, in the hydraulic shovel 2, a boom 4, an arm 5, and a bucket 6, which are movable portions, are sequentially provided on a main body 3 which travels along an endless track. Note that, the work support system 1 is not limited to the hydraulic shovel 2, and can be widely applied to various work machines used for civil engineering, construction, and agricultural work, for example, such as a construction machine used for ground improvement. Further, in the following description, the boom 4, the arm 5, and the bucket 6 may be referred to as movable portions.

As illustrated in Fig. 2, the work support system 1 mainly includes detection devices 11a, 11b, and 11c, a main body device 12, a mobile information terminal device 13, and a notification unit 14. Herein, the detection devices 11a, 11b, and 11c are respectively provided in the boom 4, the arm 5, and the bucket 6 included in the hydraulic shovel 2, acquire information (for example, posture information of a movable portion) related to movement of a movable portion by a sensor unit to be described later, and transmit the information related to movement of the movable portion to the main body device 12 by data communication using a wireless communication unit to be described later. Herein, the posture information is information capable of detecting a posture of each movable portion, and in this embodiment, three-dimensional acceleration information and angular velocity information are applied.

Next, the detection devices 11a, 11b, and 11c are described. Note that, in the case of the present embodiment, since the detection device 11a, the detection device 11b, and the detection device 11c have the same configuration, hereinafter, a configuration of the detection device 11a is described, and description of the detection devices 11b and 11c is omitted.

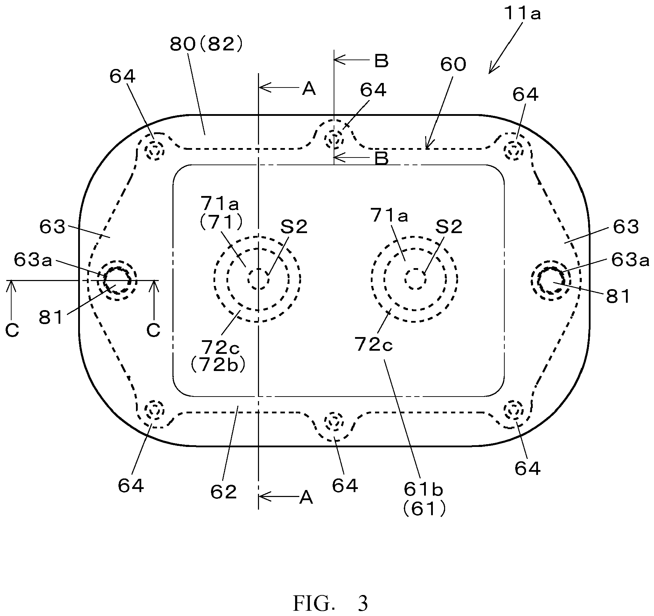

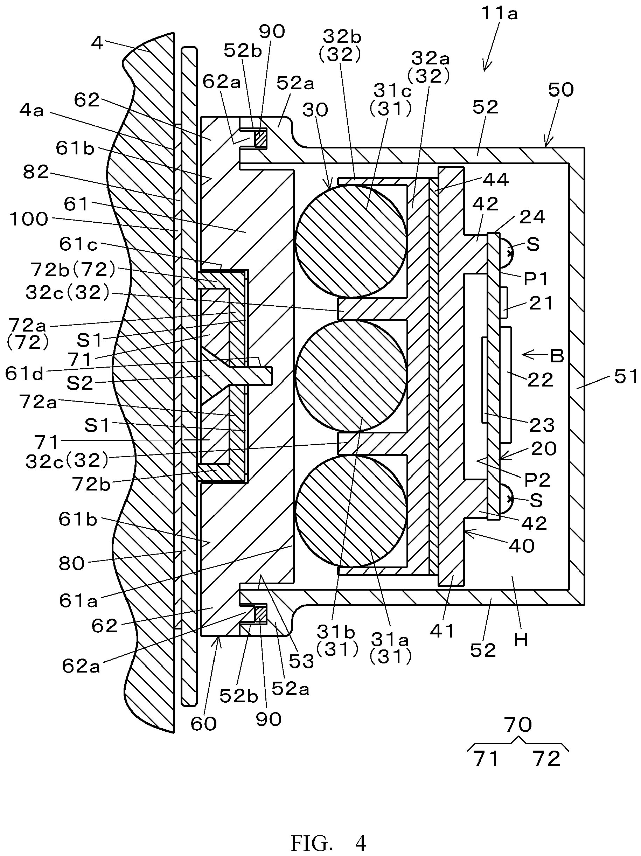

The detection device 11a is provided on the boom 4, and, as illustrated in Figs. 3 and 4, includes a substrate 20, a power supply means 30, a holding member 40, a case member 50, a cover member 60, a magnetic member 70, an attachment member 80, and an airtight member 90.

The substrate 20 is a wiring substrate on which a predetermined wiring pattern is formed, and is disposed inside the case member 50. In addition, in this case, a sensor unit 21 and a control unit 22 are mounted on one surface P1 of the substrate 20 facing the bottom-portion side of the case member 50, which will be described later, and a wireless communication unit 23 to be connected to the control unit 22 is mounted on the other surface P2 of the substrate 20 which is opposite to the one surface P1.

For example, a six-axis inertial measurement unit (IMU) sensor in which a three-dimensional acceleration sensor and an angular velocity sensor are combined can be applied to the sensor unit 21, and the sensor unit 21 detects a three dimensional acceleration and an angular velocity. Note that, the sensor unit 21 is not limited to the above-described IMU sensor, and various configurations capable of detecting a posture of a movable portion, such as an acceleration sensor, an angular velocity sensor, and a geomagnetic sensor, can be widely applied. Further, a measurement result by the sensor unit 21 is processed by the control unit 22 having a built-in arithmetic processing circuit, whereby posture information of the associated movable portion can be acquired.

For example, an antenna circuit pattern formed on the other surface P2 of the substrate 20 can be applied to the wireless communication unit 23, and the wireless communication unit 23 can transmit posture information of a movable portion processed by the control unit 22 to the main body device 12 by data communication using wireless communication. Note that, a communication unit having an antenna can be applied to the wireless communication unit 23, instead of the antenna circuit pattern.

The power supply means 30 includes a battery 31 serving as a power source for supplying electric power to the substrate 20 (the sensor unit 21, the control unit 22, and the wireless communication unit 23), and a battery case 32 for accommodating the battery 31. As the battery 31, three dry batteries 31a to 31c arranged side by side are used, and the substrate 20 is operated by electric power to be supplied from the battery 31, and transmits posture information of a movable portion processed by the control unit 22 to the main body device 12 by the wireless communication unit 23.

The battery case 32 is formed of, for example, a resin material, and includes a base portion 32a formed in such a way as to be in parallel with the substrate 20, a peripheral wall 32b rising from a peripheral edge of the base portion 32a, and a partition wall 32c for partitioning between the dry cell 31a and the dry cell 31b, and between the dry cell 31b and the dry cell 31c. Focusing on a positional relationship between the substrate 20 and the power supply means 30, the substrate 20 and the power supply means 30 are disposed inside the case member 50 in such a way as to overlap each other.

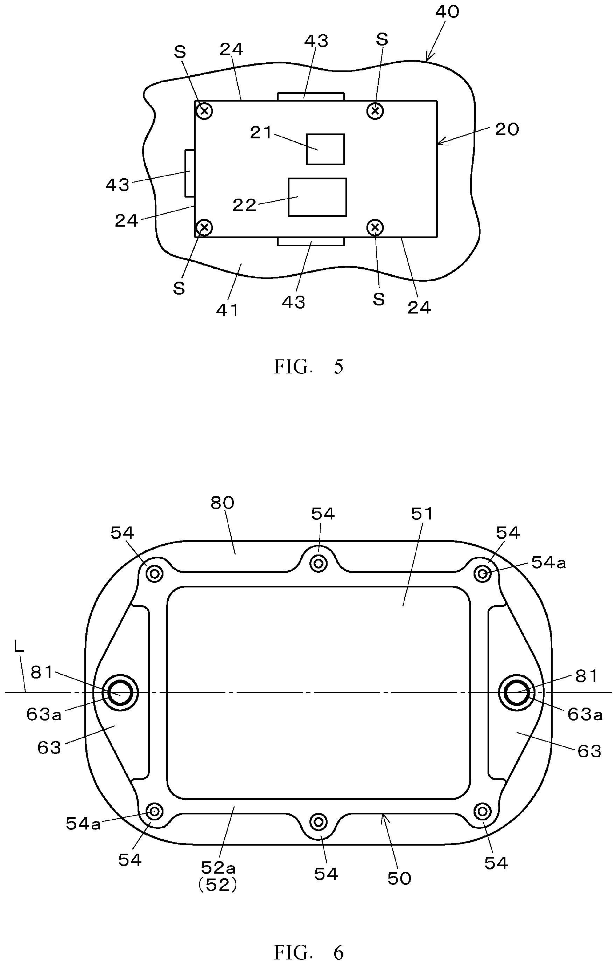

The holding member 40 is a substantially flat plate-shaped resin case (inner case) that holds the substrate 20 and the power supply means 30, and is disposed inside the case member 50 (a space portion to be described later) in such a way as to be interposed between the substrate 20 and the power supply means 30. The holding member 40 is provided with a flat plate portion 41 formed in such a way to be in parallel with the substrate 20, four protruding portions 42 protruding toward the substrate-20 side, and three positioning portions 43 (see Fig. 5) for positioning and fixing an outer peripheral portion 24 of the substrate 20.

The flat plate portion 41 is joined to the battery case 32 by a double-sided tape 44. Thus, the battery case 32 (power supply means 30) is held by the flat plate portion 41 (holding member 40). In addition, since the battery case 32 is located directly above the flat portion 41 (on the cover-member-60 side), when the battery 31 does not function (runs out), the battery 31 accommodated in the battery case 32 can be easily exchanged by removing the cover member 60 from the case member 50.

Although not illustrated in detail herein, the protruding portion 42 is formed with a screwing portion into which a screw S is screwed, and the substrate 20 is formed with a screw hole through which the screw S passes. The substrate 20 is fixed to the holding member 40 by fixing the screw S using the screw hole and the screwing portion. In other words, this means a configuration in which the substrate 20 is held by the protruding portion 42 (holding member 40).

The positioning portion 43 is, for example, a positioning rib for positioning and fixing the outer peripheral portion 24 of the substrate 20 at three positions, and is provided, for example, at two positions along a longitudinal direction of the substrate 20 and at one position along a direction substantially orthogonal to the longitudinal direction in Fig. 5. At a time of screw fixing work of the substrate 20 and the holding member 40 using the screws S, the positioning portion 43 is provided to suppress positional deviation of the substrate 20. Further, in the present example, the battery case 32 is joined to the flat plate portion 41, and the substrate 20 is fixed to the protruding portion 42 with the screws S, whereby the substrate 20 and the power supply means 30 are held on the front and rear surfaces of the holding member 40.

The case member 50 is formed of, for example, a resin material, and accommodates, in a space portion H therein, the substrate 20 including the sensor unit 21, the wireless communication unit 23, and the like, the power supply means 30, the holding member 40, and a part of a main body portion of the cover member 60, which will be described later. The case member 50 includes a bottom portion 51 as a first wall portion to be formed in such a way as to face the substrate 20, a substantially frame-shaped side portion 52 as a second wall portion surrounding the substrate 20, the power supply means 30, and the holding member 40, and an opening portion 53 to be formed in such a way as to be associated with the bottom portion 51.

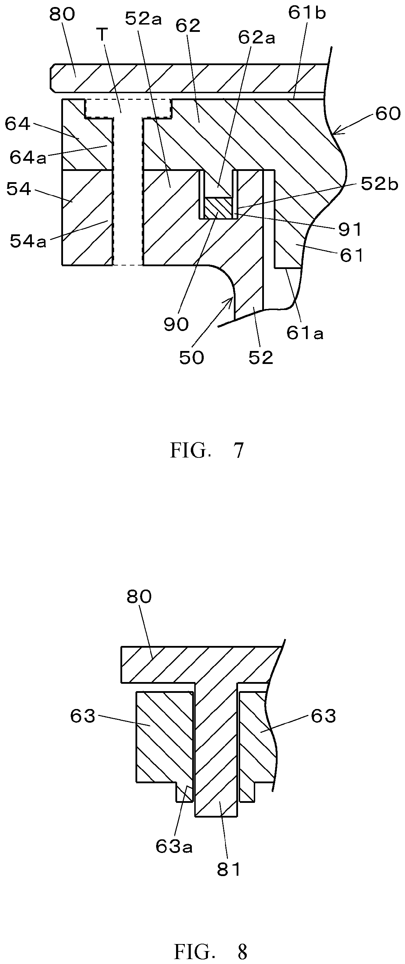

The side portion 52 is formed into a substantially frame-shaped thick side portion 52a in which a portion located on the opening-portion-53 side has a thicker shape than other portions, and the thick side portion 52a (side portion 52) is formed with a recess portion 52b formed of a frame-shaped groove portion at a position associated with a mounted portion of the cover member 60, which will be described later. Note that, the reference sign 54 denotes six substantially semi-annular first bulging portions bulging outward of the thick side portion 52a (see Fig. 6), and the first bulging portion 54 has a hole 54a for passing a bolt T indicated by dotted lines in Fig. 7, and is formed at four corners of the case member 50, namely, at each of the middle on the upper end side, and the middle on the lower end side in Fig. 6.

The cover member 60 is formed of, for example, a resin material, and is disposed on the thick side portion 52a (side portion 52) in such a way as to close the opening portion 53. As illustrated in Figs. 3 to 7, the cover member 60 includes a main body portion 61 constituting main parts thereof, a mounted portion 62 formed around the main body portion 61, and placed on the thick side portion 52a (side portion 52), a pair of bulging portions 63 bulging in the left-right direction of the mounted portion 62 in such a way as not to overlap the case member 50, and six substantially semi-annular second bulging portions 64 bulging outward of the mounted portion 62 in such a way as to be associated with the first bulging portions 54.

The main body portion 61 includes a flat surface 61a facing the battery-31 side, and an exposed surface 61b located on a side opposite to the flat surface 61a, the flat surface 61a is formed in such a way as to come into contact with the battery 31, and the exposed surface 61b is formed with a housing portion 61c at two positions, each of which has a substantially concave cross-sectional shape for accommodating the magnetic member 70. In addition, the reference sign 61d denotes a screw engagement portion formed from the housing portion 61c toward the battery-31 side, and the screw engagement portion 61d is used when the cover member 60 and the magnetic member 70 are fixed to each other by screws.

Note that, in the case of the present embodiment, the flat surface 61a and the battery 31 are in contact with each other. However, for example, a clearance may be formed between the flat surface 61a and the battery 31, and a buffer member such as sponge may be interposed to fill the clearance.

The mounted portion 62 is formed with a substantially frame-shaped projection portion 62a entering into the recess portion 52b. A positioning hole 63 a in which a positioning pin of the attachment member 80 to be described later is positioned is formed in the bulging portion 63 (see Fig. 8). The second bulging portion 64 has a hole 64a associated with the hole 54a as illustrated in Fig. 7, and the cover member 60 is fastened and fixed to the case member 50 by fixing the bolt T into the holes 64a and 54a.

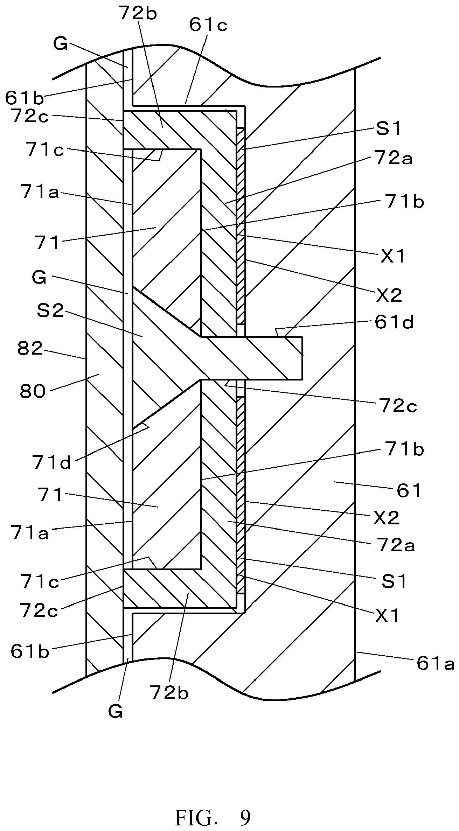

The magnetic member 70 includes a magnet 71 and a yoke 72 that accommodates the magnet 71 therein, both of which are formed of a magnetic material. The magnet 71 is formed, for example, into a substantially annular shape, and includes a first exposed portion 71b located on the attachment-member-80 side, an associated portion 71a formed in such a way as to be associated with (face) the first exposed portion 71a, and a side surface portion 71c that connects the first exposed portion 71a and the associated portion 71b, as illustrated in Figs. 4 and 9. The first exposed portion 71a is configured as an annular exposed surface, the associated portion 71b is configured as an annular surface, and the side surface portion 71c is configured as a curved side surface. In addition, a hole 71d having a substantially inverted V-shape through which a fixing screw to be described later passes is formed in a central portion of the magnet 71. Note that, the magnet 71 may have a shape other than an annular shape.

Meanwhile, the yoke 72 formed of an iron-based material is formed with a base portion 72a located on the associated-portion-71b side, and a surrounding portion 72b surrounding the side surface portion 71c, and a hole 72c communicating with the hole 71d is formed in a central portion of the base portion 72a. Further, in this case, the first exposed portion 71a configured as an annular exposed surface is located on the substantially same plane as the exposed surface 61b of the main body portion 61, and the first exposed portion 71a and the exposed surface 61b are located at a position one step lower than a second exposed portion 72d of the yoke 72 located on the distal-end side (the attachment-member-80 side) of the surrounding portion 72b. The second exposed portion 72d is configured as an annular exposed surface.

The magnetic member 70 configured as described above is fixed to the cover member 60 by an adhesive S1 and a fixing screw S2. Specifically, in this case, the base portion 72a (magnetic member 70) and the main body portion 61 ( cover member 60) are joined by the adhesive S1 interposed between a surface portion X1 of the base portion 72a and an opposing surface X2 of the housing portion 61c facing thereto, and the magnetic member 70 and the main body portion 61 (cover member 60) are fixed by the fixing screw S2 that sequentially passes through the holes 71d and 72c, and is engaged with the screw engagement portion 61d.

The attachment member 80 is a thin plate-like attachment plate formed of a magnetic material and capable of being coupled (fixed) to the second exposed portion 72d of the yoke 72 by a magnetic force. In other words, the attachment member 80 herein is coupled to the magnetic member 70 by the second exposed portion 72d, and a gap portion G is formed between the attachment member 80 and the first exposed portion 71a, and between the attachment member 80 and the exposed surface 61b.

Further, in the attachment member 80 provided in such a way as to be interposed between a movable portion (boom 4) and the cover 60, a pair of positioning pins 81 are formed to protrude toward the case-member-50 side at the middle on the left end side and at the middle on the right end side of the attachment member 80 in Fig. 6 (see Figs. 4, 6, and 8). In this case, the pair of positioning pins 81 are positioned and fixed to a pair of positioning holes 63a of the bulging portion 63, respectively, and are located on an imaginary line L that vertically divides the attachment member 80 (cover member 60) into two parts in Fig. 6. Note that, the magnetic member 70 (housing portion 61c) is located on the imaginary line L, in addition to the positioning pins 81 (positioning holes 63a).

As illustrated in Fig. 7, a substantially frame-shaped (substantially quadrangular shape in cross section) rubber seal disposed in an empty space 91 to be formed between the projection portion 62a and the recess portion 52b can be applied to the airtight member 90. Specifically, in this case, the air-tight member 90 is embedded in the recess portion 52b in a state of being compressed by the projection portion 62a. Providing the airtight member 90 in this manner enables to maintain the airtight state of the space portion H surrounded by the case member 50 and the cover member 60 in a favorable manner, and prevent foreign matter such as moisture or dust from entering into the space portion H. The detection device 11a is configured by the above-described components. Then, a flat surface 82 of the attachment member 80 located on a side opposite to the positioning pin 81, and an outer surface 4a of the boom 4 facing the flat surface 82 are joined by a double-sided tape 100 as a joining means, whereby the detection device 11a is fixed to the boom 4 (see Fig. 4).

The main body device 12 is provided in the main body 3 of the hydraulic shovel 2, transmits posture information by data communication using wireless communication by acquiring the posture information from the detection devices 11a, 11b, and 11c, and outputs support information to the notification unit 14 by receiving the support information by data communication using wireless communication. For this reason, as illustrated in Fig. 2, the main body device 12 includes a detection unit 12a, a microcomputer 12b, and a communication unit 12c that transmits and receives various pieces of data between the detection devices 1 1a, 11b, and 11c, and the mobile information terminal device 13 by data communication using wireless communication.

The detection unit 12a is configured in the same manner as the detection devices 1 1a, 11b, and 11c, and acquires posture information of the main body 3. The microcomputer 12b controls an operation of each unit by executing a control program related to the main body device 12 by a built-in arithmetic processing circuit. Thus, the microcomputer 12b acquires posture information of the main body 3 by processing a measurement result to be output from the detection unit 12a in response to an instruction of the mobile information terminal device 13, and acquires posture information from the detection devices 1 1a, 11b, and 11c.

Further, the microcomputer 12b transmits these pieces of posture information to the mobile information terminal device 13 by data communication using wireless communication. Further, the microcomputer 12b receives support information to be transmitted from the mobile information terminal device 13, and outputs the support information to the notification unit 14. Note that, the support information herein means support information for supporting an operation of the operator. In addition, when it is practically sufficient, the detection unit 12a may be omitted as necessary.

The mobile information terminal device 13 is a so-called smartphone or tablet terminal, and generates support information for supporting an operation of the operator, based on posture information by the detection devices 11a, 11b, and 11c to be acquired via the main body device 12, and posture information to be acquired by the detection unit 12a by executing application software related to the work support system 1. In this embodiment, a difference (a movable amount to a work target) with respect to a work target in the hydraulic shovel 2 is assigned to the support information, whereby work can be performed easily and securely by the support information.

The mobile information terminal device 13 includes a microcomputer 13a, a communication unit 13b, and a display unit 13c. The mobile information terminal device 13 acquires posture information from the main body device 12 by data communication using wireless communication with use of the communication unit 13b, and outputs support information for supporting an operation of the operator to the main body device 12. Further, the mobile information terminal device 13 acquires application software related to the work support system 1 from a server on a network.

The mobile information terminal device 13 causes the microcomputer 13a to execute the application software acquired by the communication unit 13b, and detects a posture of the main body 3, based on posture information to be acquired in a reference posture (for example, a posture in which the bucket 6 is placed on the ground surface when work is started). Further, the mobile information terminal device 13 computes a current position of the bucket 6 by computing a change (movable amount) in the posture of each movable portion, based on a change in each piece of posture information from the reference posture.

The microcomputer 13a successively computes a current position of the bucket 6, based on posture information to be sequentially input from the main body device 12 in such a way as to receive settings on a work target in advance, and computes a movable amount to the work target by computing a deviation (difference value) from the work target. In addition, the microcomputer 13a outputs the computed movable amount to the work target by the notification unit 14, as support information from the communication unit 13b via the main body device 12.

In addition, the microcomputer 13a performs processing of successively displaying a computation result of a movable amount to a work target on the display unit 13c constituted of a display medium such as, for example, a liquid crystal display panel. Note that, in this case, display equivalent to a display content of the display unit 13c may be performed on the notification unit 14.

The notification unit 14 notifies the operator of support information for supporting an operation of the operator to be input from the main body device 12 at an operator's seat of the hydraulic shovel 2. In this embodiment, the notification unit 14 displays, for example, a movable amount to a work target by segment display using light emitting diodes.

Note that, the notification unit 14 may be constituted of an image display panel or the like. In addition, in notification using an image display panel or the like as described above, various methods such as a case where notification is performed by display of a numerical value, a case where notification is performed by display of a meter, and the like can be applied. Further, notification may be performed by an audio sound or an alarm sound, instead of segment display or display by an image display panel. Alternatively, the notification unit 14 may be directly driven by the mobile information terminal device 13.

As described above, the present embodiment includes the sensor unit 21 that acquires information (posture information) related to movement of a movable portion provided in the hydraulic shovel 2, and transmits the acquired information (posture information) related to movement by data communication using the wireless communication unit 23, the power supply means 30 that supplies electric power to the sensor unit 21, and the case member 50 that accommodates the wireless communication unit 23, the sensor unit 21, and the power supply means 30.

Since posture information is acquired by the sensor unit 21 by power supply from the power supply means 30 provided in the space portion H of the case member 50, it is not necessary to install a power supply cable along a movable portion as in the conventional art. Therefore, according to the configuration of the present invention, it is possible to provide a compact detection device in which a wiring operation using a power supply cable is eliminated, and the power supply cable is not necessary. Further, in this case, since the wireless communication unit 23 is formed on the substrate 20 provided in the space portion H, it is not necessary to wire and connect a cable for data communication to the main body device 12. Therefore, it is possible to provide a more compact detection device which does not require any cables.

In addition, in the present embodiment, the substrate 20 and the power supply means 30 are disposed in such a way as to overlap each other inside the case member 50, which is the space portion H. Thus, an increase in the size of the shape of the side portion 52 of the case member 50 is suppressed, and it is possible to provide a compact detection device.

Further, in the present embodiment, since the three positioning portions 43 for positioning and fixing the outer peripheral portion 24 of the substrate 20 are formed on the holding member 40, it is possible to fix the substrate 20 and the holding member 40 by the screws S in a state that the outer peripheral portion 24 is temporarily fixed by the positioning portions 43, which is advantageous in improving assembling workability.

Note that, the present invention is not limited to the above embodiment and the drawings. Modifications (including deletion of constituent elements) may be appropriately added to the embodiment and the drawings as long as the gist of the present invention is not changed.

For example, in the above embodiment, three positioning portions 43 for positioning and fixing the outer peripheral portion (side surface portion) 24 of the substrate 20 are formed on the holding member 40, but the number of the positioning portions 43 may be one or two.

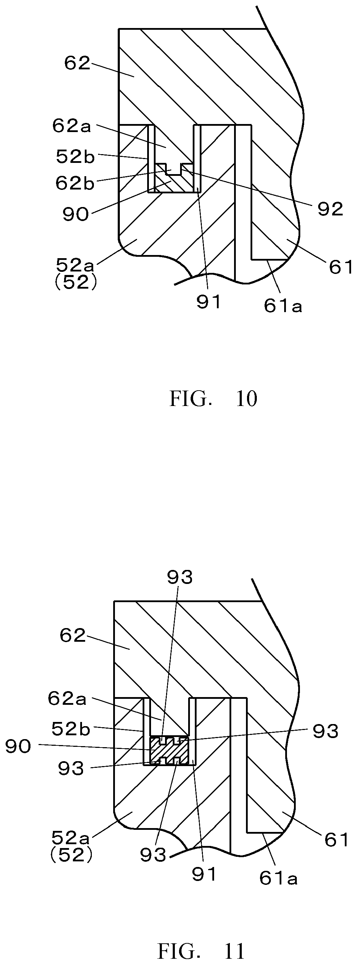

Further, in the above embodiment, although the cross-sectional shape of the airtight member 90 disposed in the empty space 91 is a quadrangular shape, the airtight member 90 may have any shape as long as the airtight state of the space portion H is favorably maintained. For example, as illustrated in Fig. 10, a convex portion 62b may be further formed on the projection portion 62a, and a concave portion 92 which is fitted to the convex portion 62b in a concave-convex manner may be formed in the airtight member 90, or as illustrated in Fig. 11, the airtight member 90 in which four grooves 93 in total, specifically, two grooves 93 on the upper side and two grooves 93 on the lower side are formed may be applied. Note that, in Fig. 10, a configuration in which the concave-convex relationship is reversed, specifically, a configuration in which a concave portion is formed in the projection portion 62a, and a convex portion capable of fitting to the concave portion formed in the projection portion 62a in a concave-convex manner is formed on the airtight member 90 may be adopted. Further, in Fig. 10, the concave portion 92 is formed on the upper side of the airtight member 90, but a concave portion may be formed on the upper and lower sides of the airtight member 90.

Further, in the above embodiment, the recess portion 52b is formed in the thick side portion 52a (side portion 52), the projection portion 62a entering into the recess portion 52b is formed on the mounted portion 62, and the airtight member 90 is disposed in the empty space 91 to be formed between the recess portion 52b and the projection portion 62a. However, conversely, a recess portion may be formed in the mounted portion 62, a projection portion entering into the recess portion may be formed on the thick side portion 52a (side portion 52), and the airtight member 90 may be disposed in an empty space to be formed between the recess portion and the projection portion.

### DESCRIPTION OF REFERENCE NUMERALS

1 Work support system
2 Hydraulic shovel (movable body)
3 Main body
4 Boom (movable portion)
5 Arm (movable portion)
6 Bucket (movable portion)
11a, 11b, 11c Detection device
12 Main body device
13 Mobile information terminal device
14 Notification unit
20 Substrate
21 Sensor unit
23 Wireless communication unit
30 Power supply means
31 Battery
32 Battery case
40 Holding member
41 Flat plate portion
42 Protruding portion
43 Positioning portion
50 Case member
51 Bottom portion (first wall portion)
52 Side portion (second wall portion)
52a Thick side portion
53 Opening portion
60 Cover member
61 Main body portion
61c Housing portion
62 Mounted portion
70 Magnetic member
71 Magnet
72 Yoke
80 Attachment member
90 Airtight member

## Claims

1. A detection device comprising:
a sensor unit that acquires information related to movement of a movable portion provided in a movable body, and transmits the acquired information related to movement by data communication using a wireless communication unit;
power supply means that supplies electric power to the sensor unit; and
a case member that accommodates the wireless communication unit, the sensor unit, and the power supply means.

2. The detection device according to claim 1, wherein
the sensor unit is mounted on a substrate disposed inside the case member.

3. The detection device according to claim 2, wherein
the case member includes a first wall portion facing the substrate, a second wall portion surrounding the power supply means, and an opening portion associated with the first wall portion, and
a cover member is disposed on the second wall portion in such a way as to close the opening portion.

4. The detection device according to claim 1, wherein
the power supply means includes a battery serving as a power source for supplying the electric power, and a battery case that accommodates the battery.

5. The detection device according to any one of claims 2 to 4, wherein
the substrate and the power supply means are disposed inside the case member in such a way as to overlap each other.

6. The detection device according to claim 5, further comprising
a holding member interposed between the substrate and the power supply means, wherein
the substrate and the power supply means are held by the holding member.

7. The detection device according to claim 6, wherein
the holding member is formed with a positioning portion for positioning and fixing an outer peripheral portion of the substrate.

8. The detection device according to claim 3, wherein
the cover member includes a mounted portion to be placed on the second wall portion, and
one of the second wall portion and the mounted portion is formed with a recess portion, the other thereof is formed with a projection portion entering into the recess portion, and an airtight member is disposed in an empty space to be formed between the recess portion and the projection portion.
